# DEMANDE DE BREVET EUROPEEN

(11) **EP 4 717 454 A1**
(43) Date de publication de la demande: **01.04.2026**
(21) Numéro de dépôt: 25203786.6
(22) Date de dépôt: 22.09.2025
(51) Int. Cl.: B32B 27/32, B32B 3/30, B32B 5/18, B32B 27/06, B32B 27/08, E04B 1/78, F16L 59/02

(54) **DISPOSITIF AMÉLIORÉ POUR ISOLATION THERMIQUE ET PROCÉDÉ DE FABRICATION**

(30) Priorité: 27.09.2024 FR 2410355
(71) Demandeur: Orion Financement, 75006 Paris (FR)
(72) Inventeur: THIERRY, Laurent, 11230 CHALABRE (FR)
(74) Mandataire: Cabinet Beau de Loménie

(57) **Abrégé**

Bande de produit isolant multicouche comprenant : une nappe primaire (10) s'étendant selon une direction longitudinale et une direction transverse, un film métallisé supérieur (20), comprenant une couche d'accroche (24) et une couche métallisée (22), le matériau formant la couche d'accroche (24) ayant une température de fusion inférieure ou égale à la température de fusion du matériau formant la nappe primaire (10), le film métallisé supérieur (20) étant calandré sur la nappe primaire (10).

## Description

### Domaine Technique

La présente invention concerne les isolants thermiques réflecteurs.

### Technique antérieure

Les isolants thermiques réflecteurs sont des systèmes isolants utilisés dans des espaces contraints. Par opposition à des isolants conventionnels qui sont volumineux, ces isolants présentent un encombrement réduit, ce qui est avantageux par exemple en termes d'aménagement, typiquement pour des volumes localisés sous les toits.

Toutefois, les problématiques liées à de tels isolants impliquent qu'une amélioration de l'isolation nécessite une amélioration du produit, plutôt qu'une simple augmentation de l'épaisseur de l'isolant comme cela peut être réalisé avec des isolants conventionnels tels que de la laine de roche.

L'invention proposée vise ainsi à améliorer les propriétés d'isolation thermique de tels isolants réflecteurs.

### Exposé de l'invention

A cet effet, la présente invention propose une bande de produit isolant multicouche comprenant :
- une nappe primaire s'étendant selon une direction longitudinale et une direction transverse,
- un film métallisé supérieur, comprenant une couche d'accroche, une couche support et une couche métallisée, la couche support étant interposée entre la couche d'accroche et la couche métallisée,

la nappe primaire comprenant une couche de polyéthylène basse densité,
la couche support étant composée de polyéthylène haute densité,
la couche d'accroche comprenant du polyéthylène basse densité,
le film métallisé supérieur étant calandré sur la nappe primaire, de manière à ce que la couche d'accroche soit solidarisée à la couche de polyéthylène basse densité, de la nappe primaire.

Selon un exemple, la bande de produit isolant comprend en outre un film métallisé inférieur, comprenant une couche d'accroche, une couche support et une couche métallisée, la couche support étant interposée entre la couche d'accroche et la couche métallisée,
la couche support étant composée de polyéthylène haute densité,
la couche d'accroche comprenant du polyéthylène basse densité,
ledit film métallisé inférieur étant calandré sur la nappe primaire, de manière à ce que la couche d'accroche soit solidarisée à la couche de polyéthylène basse densité, de la nappe primaire, et de manière à ce que la nappe primaire soit positionnée entre le film métallisé supérieur et le film métallisé inférieur.

La présente invention concerne également un ensemble comprenant une pluralité de bandes de produit isolant telles que définies précédemment, lesdites bandes définissant :
- une bande supérieure,
- une bande inférieure,
- une pluralité de bandes intermédiaires, positionnées entre la bande supérieure et la bande inférieure, lesdites bandes intermédiaires formant une structure ajourée.

La présente invention concerne également un procédé de fabrication d'une nappe d'isolant thermique, dans lequel :
- ou fournit une nappe primaire s'étendant selon une direction longitudinale et une direction transversale, la nappe primaire comprenant une couche de polyéthylène basse densité
- on fournit un film métallisé supérieur, comprenant une couche d'accroche, une couche support et une couche métallisée, la couche support étant interposée entre la couche d'accroche et la couche métallisée, la couche support étant composée de polyéthylène haute densité,
la couche d'accroche comprenant du polyéthylène basse densité,,
- on applique le film métallisé supérieur sur la face supérieure de la nappe primaire au moyen d'un cylindre chauffant, de manière à faire fondre partiellement la couche d'accroche, et à calandrer le film métallisé supérieur sur la nappe primaire, de manière à ce que la couche d'accroche soit solidarisée à la couche de polyéthylène basse densité, de la nappe primaire.

Selon un exemple,
- on fournit un film métallisé inférieur, comprenant une couche d'accroche, une couche support et une couche métallisée, la couche support étant interposée entre la couche d'accroche et la couche métallisée, la couche support étant composée de polyéthylène haute densité, la couche d'accroche comprenant du polyéthylène basse densité,
- on applique le film métallisé inférieur sur la face inférieure de la nappe primaire au moyen d'un cylindre chauffant, de manière à faire fondre partiellement le matériau de la couche d'accroche du film métallisé inférieur, et à calandrer le film métallisé inférieur sur la nappe primaire, de manière à ce que la couche d'accroche soit solidarisée à la couche de polyéthylène basse densité, de la nappe primaire, et de manière à ce que la nappe primaire soit positionnée entre le film métallisé supérieur et le film métallisé inférieur.

Selon un exemple, préalablement à l'étape de fourniture de la nappe primaire, on réalise une étape d'ajourage de la nappe primaire, dans laquelle :
- ou fournit une nappe primaire s'étendant selon une direction longitudinale et une direction transversale,
- on réalise des découpes dans la nappe primaire, lesdites découpes étant réalisées de manière à s'étendre selon la direction longitudinale,
- on étire la nappe primaire selon la direction transversale, de manière à étirer les découpes et former des ouvertures dans la nappe primaire,
- on fige la nappe primaire ainsi étirée par chauffage ou thermofixation.

La présente invention concerne également un procédé de formation d'une bande de produit isolant, dans lequel :
- ou fournit une nappe primaire s'étendant selon une direction longitudinale et une direction transversale,
- on réalise des découpes dans la nappe primaire , lesdites découpes étant réalisées de manière à s'étendre selon la direction longitudinale,
- on étire la nappe primaire selon la direction transversale, de manière à étirer les découpes et former des ouvertures dans la nappe primaire ,
- on fige la nappe primaire ainsi étirée par chauffage ou thermofixation,
- on fournit un film métallisé supérieur et un film métallisé inférieur,
- on solidarise le film métallisé supérieur et le film métallisé inférieur à la nappe primaire, de manière à ce que la nappe primaire soit positionnée entre le film métallisé supérieur et le film métallisé inférieur.

Selon un exemple, la solidarisation du film métallisé supérieur et du film métallisé inférieur à la nappe primaire est réalisée par collage ou par calandrage.

Selon un exemple, la nappe primaire est ajourée de manière à présenter un taux d'ouverture compris entre 10% et 80%, ou encore entre 40% et 60%.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 présente schématiquement un exemple de produit selon un aspect de l'invention.
[Fig. 2] La figure 2 présente schématiquement un autre exemple de produit selon un aspect de l'invention.
[Fig. 3] La figure 3 présente schématiquement un autre exemple de produit selon un aspect de l'invention.
[Fig. 4] La figure 4 présente schématiquement un exemple de système isolant formé au moyen de produits selon l'invention.
[Fig. 5] La figure 5 présente schématiquement un autre exemple de système isolant formé au moyen de produits selon l'invention.
[Fig. 6] La figure 6 présente schématiquement un autre exemple de système isolant formé au moyen de produits selon l'invention.
[Fig. 7] La figure 7 illustre schématiquement un exemple d'appareillage pour la réalisation d'un produit selon l'invention.
[Fig. 8] La figure 8 illustre schématiquement un exemple d'une étape d'un procédé de formation de zones évidées dans une bande primaire.
[Fig. 9] La figure 9 illustre schématiquement un exemple d'une bande primaire présentant des évidements.
[Fig. 10] La figure 10 présente schématiquement un exemple de produit selon l'invention.
Sur l'ensemble des figures, les éléments en commun sont repérés par des références numériques identiques.

### Description des modes de réalisation

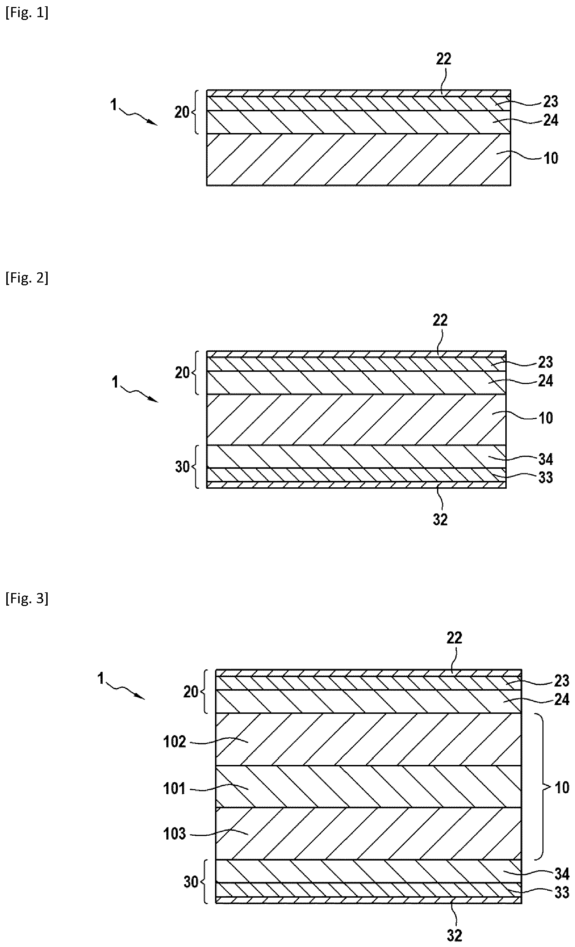

La figure 1 présente schématiquement un exemple de produit 1 selon un aspect de l'invention.

Le produit tel que présenté est un produit isolant sous forme de bande ou de plaque, comprenant une nappe primaire 10 s'étendant selon une direction longitudinale et une direction transverse, ainsi qu'un film métallisé supérieur 20.

Dans l'exemple illustré, la nappe primaire 10 comprend une couche unique, sur laquelle est positionné le film métallisé supérieur 20.

Dans le présent texte, les désignations « supérieure » et « inférieure » sont purement indicatives et non limitatives, et ont pour seule vocation de faciliter la compréhension.

Le film métallisé supérieur 20 comprend une couche d'accroche 24, une couche support 23 et une couche métallisée 22. La couche support 23 est interposée entre la couche d'accroche 24 et la couche métallisée 22.

La nappe primaire 10 est typiquement réalisée en mousse, typiquement en polyéthylène basse densité (LDPE). Dans le cas d'une nappe multicouche, elle peut également comprendre d'autres matériaux, notamment du polyéthylène haute densité (HDPE).

Le film métallisé supérieur 20 est typiquement un film métallisé à base de polyéthylène ou de polypropylène dont l'émissivité mesurée sur la face métallisée selon la norme EN16012 est typiquement comprise entre 0,02 et 0,2, plus précisément entre 0,05 et 0,07. La métallisation est par exemple en aluminium. La couche métallisée présente typiquement une épaisseur de l'ordre d'une centaine d'Angstrom. La couche d'accroche 24 est ainsi typiquement réalisée en polyéthylène basse densité (LDPE). La couche support 23 est typiquement réalisée en polyéthylène haute densité (HDPE).

Le film métallisé supérieur 20 est solidarisé à la face supérieure de la nappe primaire 10 via sa couche d'accroche 24, de manière à ce que la couche d'accroche 24 en LDPE soit solidarisée à une couche de LDPE de la nappe primaire 10.

La figure 2 présente schématiquement un autre exemple de produit 1 selon un aspect de l'invention.

On retrouve dans ce mode de réalisation les éléments déjà présentés en référence à la figure 1, ainsi que les éléments détaillés ci-après.

Dans cet exemple de réalisation, le produit comprend également un film métallisé inférieur 30, solidarisé à la face inférieure de la nappe primaire 10, c'est-à-dire à la face inférieure de la couche inférieure 300 par calandrage.

Le film métallisé inférieur 30 comprend une couche d'accroche 34, une couche support 33 et une couche métallisée 32. La couche support 33 est interposée entre la couche d'accroche 34 et la couche métallisée 32.

Le film métallisé inférieur 30 est typiquement un film métallisé à base de polyéthylène ou de polypropylène dont l'émissivité mesurée sur la face métallisée selon la norme EN16012 est typiquement comprise entre 0,02 et 0,2, plus précisément entre 0,05 et 0,07. La métallisation est par exemple en aluminium. La couche d'accroche 34 est ainsi typiquement réalisée en polyéthylène basse densité (LDPE). La couche support 33 est typiquement réalisée en polyéthylène haute densité (HDPE).

Le film métallisé inférieur 30 est solidarisé à la face inférieure de la nappe primaire 10 via sa couche d'accroche 34, de manière à ce que la couche d'accroche 34 en LDPE soit solidarisée à une couche de LDPE de la nappe primaire 10.

La figure 3 présente schématiquement un autre exemple de produit 1 selon un aspect de l'invention.

On retrouve dans ce mode de réalisation les éléments déjà présentés en référence aux figures 1 et 2, ainsi que les éléments détaillés ci-après.

Dans ce mode de réalisation, nappe primaire 10 est formée de trois couches superposées, désignées successivement par 102, 101 et 103, selon une direction allant du film métallisé supérieur 20 vers le film métallisé inférieur 30. Les couches 101, 102 et 103 sont typiquement réalisée en polyéthylène basse densité (LDPE), ou sont typiquement majoritairement réalisées en polyéthylène basse densité (LDPE).

Plus généralement, la nappe primaire 10 peut être formée d'un empilement d'un nombre quelconque de couches. Les couches formant la nappe primaire 10 peuvent être agencées de manière symétrique ou non.

Les différents produits proposés sont des produits fins, ayant une épaisseur typiquement comprise entre 2 et 10 mm.

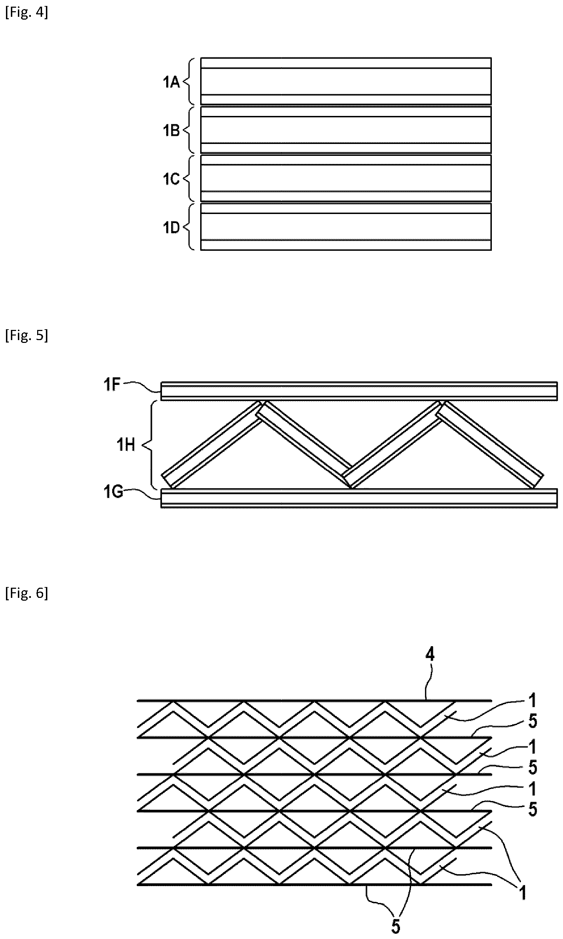

La figure 4 présente schématiquement un exemple de système isolant formé au moyen de produits selon l'invention.

Dans cet exemple, on superpose 4 produits désignés par les références 1A, 1B, 1C et 1D. Ces produits peuvent être identiques ou distincts. Il peut par exemple s'agit de 4 produits identiques ayant chacun une structure telle que décrite précédemment en référence à l'une des figures 1 à 3.

L'ensemble formé définit ainsi une plaque ou un panneau isolant, dont la rigidité dépend notamment du nombre de produits superposés et de la structure de chacun des produits.

Une telle superposition de produits permet d'obtenir un ensemble ayant des propriétés améliorées en termes d'isolation thermique.

La figure 5 présente schématiquement un autre exemple de système isolant formé au moyen de produits selon l'invention.

Dans ce mode de réalisation, deux produits 1F et 1G forment deux panneaux horizontaux, tandis que des produits 1H sont positionnés entre ces deux produits 1F et 1G de manière à former une structure ajourée. Dans l'exemple illustré, les produits 1H sont positionnés de manière à former une structure ondulée, entrecroisée ou crénelée, définissant ainsi des évidements entre les produits 1F et 1G.

Une telle structure permet de former un produit du type panneau comprenant des poches d'air qui contribuent ainsi à l'isolation thermique.

Le mode de réalisation illustré n'est pas limitatif ; on peut notamment superposer plusieurs ensembles constitués de la sorte, ou encore superposer différentes couches de produits formant une structure ajourée. On peut notamment positionner plusieurs couches de produit 1H en quinconce entre les produits 1F et 1G.

La figure 6 présente schématiquement un autre exemple de système isolant formé au moyen de produits selon l'invention.

On représente sur cette figure un système isolant comprenant un film externe 4, typiquement un film métallisé, auquel sont associés une pluralité d'ensembles, chaque ensemble étant composé d'un produit 1 tel que défini précédemment et d'un film 5, typiquement un film métallisé. Un tel ensemble est typiquement désigné comme étant un « simplex ». Un premier ensemble est solidarisé au film externe 4 de manière à ce que le produit soit entre le film externe 4 et le film 5 de l'ensemble.

Un second ensemble peut être assemblé au premier ensemble, de manière à ce que le produit 1 du second ensemble soit entre deux films 5. Plusieurs ensembles peuvent être superposés de la sorte pour obtenir un système de l'épaisseur souhaitée et présentant les propriétés d'isolation thermique souhaitées.

Dans l'exemple illustré, les produits 1 forment une structure ondulée, entrecroisée ou crénelée. Dans le cas d'un système comprenant plusieurs ensembles superposés, les différents ensembles sont alors typiquement positionnés en quinconce, de manière à ce que les ondulations ou motifs formés par les produits 1 soient décalés d'un demi-pas pour en permettre l'assemblage.

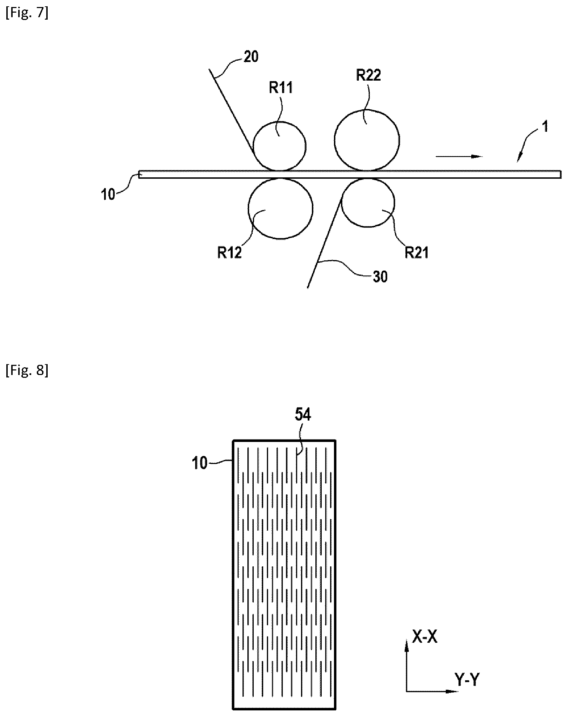

La figure 7 illustre schématiquement un exemple d'appareillage pour la réalisation d'un produit tel que présenté précédemment.

On représente schématiquement sur cette figure un dispositif pour le calandrage des films métallisés 20 et 30 de part et d'autre de la nappe primaire 10. On comprend bien qu'en fonction de la structure du produit souhaité, le dispositif peut être modifié, notamment pour n'appliquer que l'un des films métallisés 20 et 30.

Le dispositif tel que présenté comprend ainsi deux paires de rouleaux ; une première paire de rouleaux R11 et R12, et une seconde paire de rouleaux R21 et R22. Le sens de déplacement du produit est symbolisé par une flèche.

La nappe primaire 10 est amenée entre chacune des paires de rouleaux.

Le film métallisé supérieur 20 est fourni au niveau de la première paire de rouleaux R11 et R12. Dans l'exemple illustré, le film métallisé supérieur 20 est entrainé par le rouleau R11 de la première paire de rouleaux.

Le rouleau R11 de la première paire de rouleaux est typiquement un rouleau chauffant, adapté pour appliquer de l'énergie thermique aux éléments en contact.

Les rouleaux R11 et R12 sont positionnés de manière à définir un écart pour le passage de la nappe primaire 10 et du premier film métallisé 20.

L'écart entre les rouleaux R11 et R12 ainsi que l'effet de chauffage réalisé par le rouleau R11 sont dimensionnés de manière à réaliser la fusion au moins partielle de la couche d'accroche 22 du film métallisé supérieur 20, et ainsi à solidariser le film métallisé supérieur 20 à la nappe primaire 10.

La température de chauffage du rouleau R11 est définie notamment en fonction de la vitesse de rotation du rouleau R11, des matériaux formant le film métallisé supérieur 20 et la nappe primaire 10, et également des dimensions du rouleau R11.

La température de chauffage du rouleau R11 est typiquement définie de manière à ne pas provoquer la fusion de la couche support 23 du film métallisé supérieur 20.

Le passage entre les rouleaux R11 et R12 permet ainsi de réaliser un assemblage du film métallisé supérieur 20 sur la nappe primaire 10 par calandrage.

De la même manière Le film métallisé inférieur 30 est fourni au niveau de la seconde paire de rouleaux R21 et R22. Dans l'exemple illustré, le film métallisé inférieur 30 est entrainé par le rouleau R21 de la seconde paire de rouleaux.

Le rouleau R21 de la première paire de rouleaux est typiquement un rouleau chauffant, adapté pour appliquer de l'énergie thermique aux éléments en contact.

Les rouleaux R21 et R22 sont positionnés de manière à définir un écart pour le passage de la nappe primaire 10 et du second film métallisé 30.

L'écart entre les rouleaux R21 et R22 ainsi que l'effet de chauffage réalisé par le rouleau R21 sont dimensionnés de manière à réaliser la fusion au moins partielle de la couche d'accroche 32 du film métallisé inférieur 30, et ainsi à solidariser le film métallisé inférieur 30 à la nappe primaire 10.

La température de chauffage du rouleau R21 est définie notamment en fonction de la vitesse de rotation du rouleau R21, des matériaux formant le film métallisé inférieur 30 et la nappe primaire 10, et également des dimensions du rouleau R21. La température de chauffage du rouleau R11 est typiquement définie de manière à ne pas provoquer la fusion de la couche support 33 du film métallisé inférieur 30.

Le passage entre les rouleaux R21 et R22 permet ainsi de réaliser un assemblage du film métallisé inférieur 30 sur la nappe primaire 10 par calandrage.

Selon un autre aspect de l'invention, la nappe primaire 10 peut être ajourée.

La nappe primaire 10 est typiquement une nappe de mousse, typiquement en Polyéthylène. Cette nappe de mousse est typiquement pleine (ou non ajourée) lors de sa formation, et est ensuite typiquement ajourée par un procédé adapté, notamment un procédé tel qu'on le décrira par la suite.

La figure 8 présente un exemple de nappe primaire 10. Dans cet exemple, on réalise des découpes 54 dans cette nappe primaire 10, typiquement selon un motif en quinconce. Les découpes 54 telles que représentées sont réalisées selon une direction verticale ou longitudinale X-X de la nappe primaire 10.

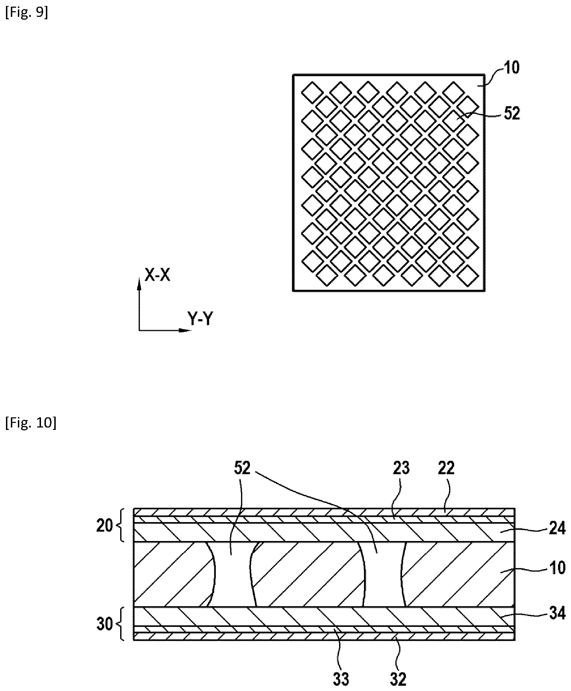

La nappe primaire 10 peut ensuite être étirée selon la direction transverse Y-Y perpendiculaire à la direction longitudinale X-X, c'est-à-dire selon la direction horizontale sur les figures 8 et 9.

L'effet de cet étirement est représenté sur la figure 9. On observe ici un étirement de la nappe primaire 10 selon la direction transverse Y-Y, et une contraction de la nappe primaire 10 selon la direction transverse X-X. Les découpes 54 formées précédemment dans la nappe primaire s'ouvrent et forment ici des ouvertures 52 schématisées ici comme ayant une forme de carrés ou losanges.

La nappe primaire 10 ainsi étirée est ensuite typiquement chauffée de manière à fixer cette mise en forme.

La nappe primaire 10 ainsi obtenue est une nappe ajourée, dont le taux d'ouverture dépend notamment des découpes réalisées et de l'étirement réalisé.

L'obtention d'une nappe primaire 10 sous la forme d'une mousse ajourée est avantageux en termes d'isolation. En effet, une fois la nappe primaire 10 enveloppée de part et d'autre par exemple au moyen de films métallisés, typiquement un film métallisé supérieur 20 et un film métallisé inférieur 30 tels que décrits précédemment, les zones ajourées forment des lames d'air ou bulles d'air qui présentent de meilleures propriétés que la mousse en termes d'isolation thermique. L'association avec des films métallisés peut notamment être réalisée par collage, ou par calandrage tel que défini précédemment.

La figure 10 présente schématiquement un exemple de produit ainsi obtenu. Le film métallisé supérieur 20 et le film métallisé inférieur 30 sont solidarisés à la nappe primaire 10 au niveau des zones non ajourées.

Selon un exemple, la nappe primaire 10 présente un taux d'ouverture compris entre 10% et 80%, ou encore entre 40% et 60%.

Le taux d'ouverture est défini comme la surface des évidements par rapport à la surface totale de la nappe primaire 10, en vue selon un plan défini par la direction longitudinale X-X et la direction transverse Y-Y de la nappe primaire 10.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Bande de produit isolant multicouche comprenant :
- une nappe primaire (10) s'étendant selon une direction longitudinale et une direction transverse,
- un film métallisé supérieur (20), comprenant une couche d'accroche (24), une couche support (23) et une couche métallisée (22), la couche support (23) étant interposée entre la couche d'accroche (24) et la couche métallisée (22),
la nappe primaire (10) comprenant une couche de polyéthylène basse densité,
la couche support (23) étant composée de polyéthylène haute densité,
la couche d'accroche (24) comprenant du polyéthylène basse densité,
le film métallisé supérieur (20) étant calandré sur la nappe primaire (10), de manière à ce que la couche d'accroche (24) soit solidarisée à la couche de polyéthylène basse densité, de la nappe primaire (10).

2. Bande de produit isolant selon la revendication 1, comprenant en outre un film métallisé inférieur (30), comprenant une couche d'accroche (34), une couche support (33) et une couche métallisée (32), la couche support (33) étant interposée entre la couche d'accroche (34) et la couche métallisée (32),
la couche support (23) étant composée de polyéthylène haute densité,
la couche d'accroche (24) comprenant du polyéthylène basse densité,
ledit film métallisé inférieur (30) étant calandré sur la nappe primaire (10), de manière à ce que la couche d'accroche (34) soit solidarisée à la couche de polyéthylène basse densité, de la nappe primaire (10), et de manière à ce que la nappe primaire (10) soit positionnée entre le film métallisé supérieur (20) et le film métallisé inférieur (30).

3. Ensemble comprenant une pluralité de bandes de produit isolant selon l'une quelconque des revendications 1 ou 2, lesdites bandes définissant :
- une bande supérieure,
- une bande inférieure,
- une pluralité de bandes intermédiaires, positionnées entre la bande supérieure et la bande inférieure, lesdites bandes intermédiaires formant une structure ajourée.

4. Procédé de fabrication d'une nappe d'isolant thermique, dans lequel :
- ou fournit une nappe primaire (10) s'étendant selon une direction longitudinale et une direction transversale, la nappe primaire (10) comprenant une couche de polyéthylène basse densité
- on fournit un film métallisé supérieur (20), comprenant une couche d'accroche (24), une couche support (23) et une couche métallisée (22), la couche support (23) étant interposée entre la couche d'accroche (24) et la couche métallisée (22), la couche support (23) étant composée de polyéthylène haute densité,
la couche d'accroche (24) comprenant du polyéthylène basse densité,,
- on applique le film métallisé supérieur (20) sur la face supérieure de la nappe primaire (10) au moyen d'un cylindre chauffant (R11), de manière à faire fondre partiellement la couche d'accroche (24), et à calandrer le film métallisé supérieur (20) sur la nappe primaire (10), de manière à ce que la couche d'accroche (24) soit solidarisée à la couche de polyéthylène basse densité, de la nappe primaire (10).

5. Procédé selon la revendication 4, dans lequel :
- on fournit un film métallisé inférieur (30), comprenant une couche d'accroche (34), une couche support (33) et une couche métallisée (32), la couche support (33) étant interposée entre la couche d'accroche (34) et la couche métallisée (32), la couche support (23) étant composée de polyéthylène haute densité, la couche d'accroche (24) comprenant du polyéthylène basse densité,
- on applique le film métallisé inférieur (30) sur la face inférieure de la nappe primaire (10) au moyen d'un cylindre chauffant (R21), de manière à faire fondre partiellement le matériau de la couche d'accroche (34) du film métallisé inférieur (30), et à calandrer le film métallisé inférieur (30) sur la nappe primaire (10), de manière à ce que la couche d'accroche (34) soit solidarisée à la couche de polyéthylène basse densité, de la nappe primaire (10), et de manière à ce que la nappe primaire (10) soit positionnée entre le film métallisé supérieur (20) et le film métallisé inférieur (30).

6. Procédé selon l'une des revendications 4 ou 5, dans lequel préalablement à l'étape de fourniture de la nappe primaire (10), on réalise une étape d'ajourage de la nappe primaire (10), dans laquelle :
- ou fournit une nappe primaire (10) s'étendant selon une direction longitudinale et une direction transversale,
- on réalise des découpes (54) dans la nappe primaire (10), lesdites découpes étant réalisées de manière à s'étendre selon la direction longitudinale,
- on étire la nappe primaire (10) selon la direction transversale, de manière à étirer les découpes et former des ouvertures (52) dans la nappe primaire ,
- on fige la nappe primaire (10) ainsi étirée par chauffage ou thermofixation.
